# EUROPEAN PATENT APPLICATION

(11) **EP 3 453 984 A1**
(43) Date of publication of application: **13.03.2019**
(21) Application number: 18193420.9
(22) Date of filing: 10.09.2018
(51) Int. Cl.: F24H 8/00, F16T 1/20

(54) **VALVE FOR DRAINING THE CONDENSATE OF A CONDENSING BOILER**

(30) Priority: 11.09.2017 IT 201700101472
(71) Applicant: Riello S.p.A., 37045 Legnago (IT)
(72) Inventor: CASIRAGHI, Stefano, 23875 OSNAGO (LC) (IT); CIOFOLO, Noè, 23816 BARZIO (LC) (IT)
(74) Representative: Eccetto, Mauro

(57) **Abstract**

A valve (1) for draining the condensate of a condensing boiler extends along an axis (A) and comprises a valve body (2); a first and a second pipe (3, 4) that protrude inside the valve body (2) on opposite sides of the valve body parallel to the axis (A); at least one shutter (5; 5, 6), which is arranged inside the valve body (2), is moveable with respect to the valve body (2) along the axis (A), and is configured to float in the condensate to allow the condensate to flow, and shut the free end of the first and the second pipe (3, 4) inside the valve body (2) when the condensate is not flowing.

## Description

### CROSS-REFERENCE TO RELATED APPLICATIONS

This application claims priority from Italian Patent Application No. 102017000101472 filed on September 11, 2017.

### TECHNICAL FIELD

The present invention relates to a valve for draining the condensate of a condensing boiler.

### PRIOR ART

Condensing boilers comprise a heat exchanger in which the water vapour in the combustion-borne fumes is transformed into condensate. The condensate is evacuated from the boiler via an exhaust pipe that connects the boiler to the drain, and is generally discharged into the storm sewage. The exhaust pipe comprises a siphon arranged in the boiler in the vicinity of the heat exchanger to prevent the residual combustion fumes in the heat exchanger from evacuating through the condensate exhaust pipe. This arrangement may be insufficient because the siphon is ineffective in the absence of condensation. The absence of condensation in the exhaust pipe is an event that occurs when the boiler is ignited for the first time or in the event of long periods of inactivity of the boiler.

It is therefore necessary to install a valve along the condensate exhaust pipe, which allows the liquids to flow and prevents the gas from flowing.

### OBJECT OF THE INVENTION

The object of the present invention is to provide a valve for draining the condensate of a condensing boiler, which prevents the fume discharge.

In accordance with the present invention, there is provided a valve for draining the condensate of a condensing boiler, the valve extending along an axis and comprising a valve body; a first and a second pipe that protrude inside the valve body on opposite sides of the valve body parallel to the axis; at least one shutter, which is arranged inside the valve body, is moveable with respect to the valve body along the axis, and is configured to float in the condensate to allow the condensate to flow, and shut the free end of the first and the second pipe inside the valve body when the condensate is not flowing.

In this way, the shutter can only be opened when condensation occurs inside the valve body. In the absence of condensation, the float remains resting by gravity on the free end of the underlying pipe. The operation of the valve is not impaired even if it is installed upside down. The only care to be taken when installing the valve is to maintain the valve axis in a substantially vertical position. Moreover, the valve can be installed anywhere along an exhaust pipe and not necessarily in the vicinity of the boiler.

In particular, the first and the second pipe protrude outside the valve body for defining, respectively, a first and a second connector to connect the valve body to further conduit members. In this way, the valve is particularly easy to connect.

In accordance with a constructional particularity, the valve body comprises a first and a second cup-shaped body, which are joined to the first and the second pipe, respectively.

In particular, the assembly comprising the first cup-shaped body and the first pipe is manufactured in one piece of plastic material, and the assembly comprising the second cup-shaped body and the second pipe is manufactured in one piece of plastic material, wherein the assembly comprising the first cup-shaped body and the first pipe, and the assembly comprising the second cup-shaped body and the second pipe are identical.

This solution reduces production costs. In particular, one mould is sufficient to make two pieces of the valve.

In accordance with a particular embodiment of the present invention, the valve comprises an intermediate body, which has an annular member arranged between the first and the second cup-shaped body, and a fastening member for fastening the valve. In this way, the valve body can be fixed to a wall and the annular member can easily be joined to the first and the second cup-shaped body.

In particular, the valve comprises a first and a second shutter, which are arranged inside the valve body, are moveable with respect to the valve body along axis (A), and are configured to float in the condensate to allow the condensate to flow, and shut the ends of the first and the second pipe, respectively, inside the valve body when the condensate is not flowing.

The presence of a first and a second shutter reduces the stroke of the shutters and reduces the possibility of stoppage of the first and the second shutter.

In particular, the intermediate body comprises a stop member for limiting the stroke of the first and the second shutter, in particular, the stop member is equidistant from the free ends of the first and the second pipe inside the valve body.

This solution further reduces the stroke of the first and the second shutter and prevents the position of one of the first and the second shutter from affecting the position of the other one of the second and the first shutter.

In particular, the stop member comprises a plurality of rods, which are arranged in a radial direction with respect to the axis and extend inside the annular member.

This solution allows the stop to be defined, the condensate to flow inside the valve body and stiffen the intermediate body, which has the function of supporting the entire valve.

In particular, the annular member comprises a plurality of spacers for maintaining the first and the second shutter centred with respect to the annular member.

This solution allows the condensate to flow in a substantially uniform manner into the space between the annular member and the shutter.

### BRIEF DESCRIPTION OF THE DRAWINGS

Further features and advantages of the present invention will be apparent from the following description of a non-limiting embodiment thereof, with reference to the Figures of the accompanying drawings, wherein:
- Figure 1 is a perspective view, with parts removed for clarity, of a valve made in accordance with the present invention;
- Figure 2 is an exploded perspective view, with parts removed for clarity, of the valve in Figure 1;
- Figure 3 is a sectional view, with parts removed for clarity, of the valve in Figure 1.

### PREFERRED EMBODIMENT OF THE INVENTION

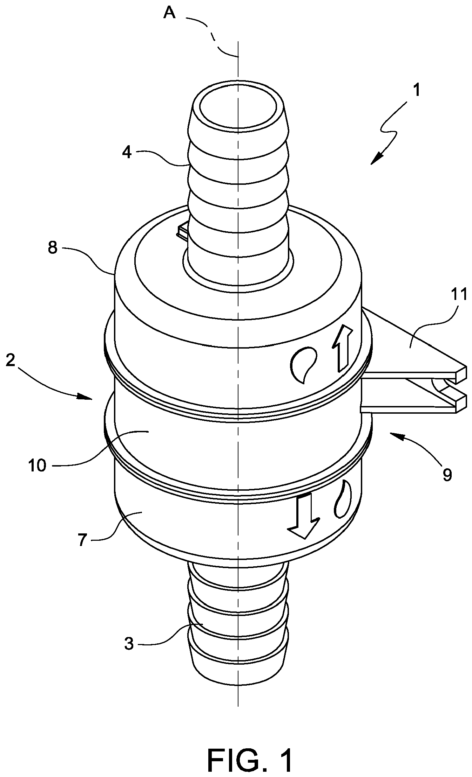

With reference to Figure 1, number 1 indicates, as a whole, a valve for draining the condensate of a condensing boiler. In this case, the valve 1 extends along an axis A and comprises a valve body 2; two pipes 3 and 4 which protrude inside and outside of the valve body 2 on opposite sides of the valve body 2. The valve body 2 and the pipes 3 and 4 are substantially cylindrical and coaxial, and extend around and along the axis A.

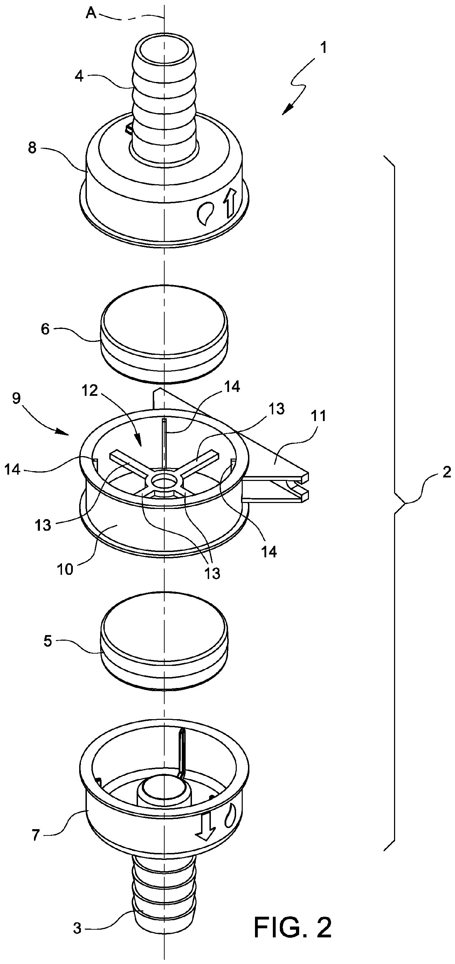

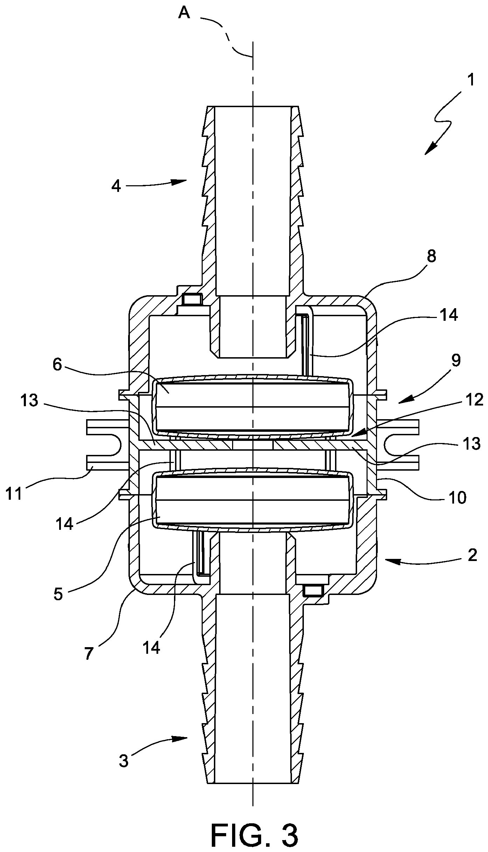

With reference to Figures 2 and 3, the valve 1 comprises two shutters 5 and 6, which are arranged inside the valve body 2, are moveable with respect to the valve body 2 along axis A, and are configured to float in the condensate to allow the condensate to flow.

Each of the shutters 5 and 6 has a discoidal shape, is hollow, and is preferably formed by two concave discs welded together so as to define a hollow body that floats easily in the condensate. The diameter of the shutters 5 and 6 is slightly smaller than the inside diameter of the valve body 4 so as to allow the condensate to flow into the space between the shutters and the valve body 2.

The portions of the pipes 3 and 4 external to the valve body 2 define connectors for connecting the valve body 2 to further members of an exhaust pipe not shown in the attached Figures.

The valve body 2 comprises two cup-shaped bodies 7 and 8, which are joined to the first and the second pipe 3 and 4, respectively. In this case, the assembly of the cup-shaped body 7 and the pipe 3 is manufactured in one piece of plastic material formed by moulding, in particular by injection moulding. Similarly, the assembly of the cup-shaped body 8 and the pipe 4 is manufactured in one piece, is identical to the assembly of the cup-shaped body 7 and the pipe 3, and is formed by moulding, in particular by injection moulding.

The valve 1 comprises an intermediate body 9, which comprises an annular member 10 arranged between the first and the second cup-shaped body 7 and 8 to jointly define the valve body 2; and a fastening member 11 for fastening the valve 1, for example, to a wall, not shown in the attached Figures. The intermediate body 9 is also moulded in one piece. The annular member 10 comprises a stop member 12 for limiting the axial stroke of the shutters 5 and 6. In this case, the stop member 12 comprises a plurality of rods 13 extending radially inside the annular member 10.

Furthermore, the annular member 10 comprises spacers 14 for maintaining the first and the second shutter 5 and 6 centred with respect to the annular member 10. In this case, the spacers 14 are ribs, which are parallel to axis A, protrude from the annular member 10, and are integral with the annular member 10.

In use, when no condensate flow occurs inside the valve 2, the configuration of the valve is the one shown in Figure 2: the shutter 5 is rested on the free end of the pipe 3, thereby preventing the fumes from escaping through the valve 1, and the shutter 6 is rested on the stop 12.

When the condensate is discharged, the condensate enters the valve body 2 through the pipe 4 and flows around the shutters 5 and 6, and is initially collected on the bottom of the cup-shaped body 7. The condensate level in the cup-shaped body 7 grows progressively until the shutter 5 is raised and the free end of the pipe 3 is cleared so that the condensate can flow freely through the pipe 3.

One of the particularities of the valve of the present invention is that the operation thereof is not impaired even when its direction is reverted, provided that the axis A is maintained in a substantially vertical position.

Lastly, it is clear that modifications and variations may be made to the valve of the present invention without departing from the scope of the appended claims.

In particular, the valve may comprise a single shutter. In this case, the stop of the shutter stroke must be omitted.

## Claims

1. A valve for draining the condensate of a condensing boiler, the valve (1) extending along an axis (A) and comprising a valve body (2); a first and a second pipe (3, 4) that protrude inside the valve body (2) on opposite sides of the valve body (2) parallel to the axis (A); at least one shutter (5; 5, 6), which is arranged inside the valve body (2), is moveable with respect to the valve body (2) along the axis (A), and is configured to float in the condensate to allow the condensate to flow, and shut the free end of the first and the second pipe (3, 4) inside the valve body (2) when the condensate is not flowing.

2. The valve as claimed in Claim 1, wherein the first and the second pipe (3, 4) protrude outside the valve body (2) for defining, respectively, a first and a second connector to connect the valve body (2) to further conduit members.

3. The valve as claimed in any one of the foregoing Claims, wherein the valve body (2) comprises a first and a second cup-shaped body (7, 8), which are joined to the first and the second pipe (3, 4), respectively.

4. The valve as claimed in Claim 3, wherein the assembly comprising the first cup-shaped body (7) and the first pipe (3) is manufactured in one first piece of plastic material, and the assembly comprising the second cup-shaped body (8) and the second pipe (4) is manufactured in one piece of plastic material, wherein the assembly comprising the first cup-shaped body (7) and the first pipe (3), and the assembly comprising the second cup-shaped body (8) and the second pipe (4) are identical.

5. The valve as claimed in Claim 3 or 4, and comprising an intermediate body (9), which has an annular member (10) arranged between the first and the second cup-shaped body (7, 8), and a fastening member (11) for fastening the valve (1).

6. The valve as claimed in Claim 5, and comprising a first and a second shutter (5, 6), which are arranged inside the valve body (2), are moveable with respect to the valve body (2) along axis (A), and are configured to float in the condensate to allow the condensate to flow, and shut the ends of the first and the second pipe (3, 4), respectively, inside the valve body (2) when the condensate is not flowing.

7. The valve as claimed in Claim 6, wherein the intermediate body (9) comprises a stop member (12) for limiting the stroke of the first and the second shutter (5, 6), in particular, the stop member (12) is equidistant from the free ends of the first and the second pipe (3, 4) inside the valve body (2).

8. The valve as claimed in Claim 7, wherein said stop member (12) comprises a plurality of rods, which are arranged in a radial direction with respect to axis (A) and extend inside the annular member (10).

9. The valve as claimed in any one of the Claims from 6 to 8, wherein the annular member (10) comprises a plurality of spacers (14) for maintaining the first and the second shutter (5, 6) centred with respect to the annular member (10).
